# EUROPEAN PATENT SPECIFICATION

(11) **EP 1 886 548 B1**
(45) Date of publication and mention of the grant of the patent: **28.10.2009**
(21) Application number: 07113905.9
(22) Date of filing: 07.08.2007
(51) Int. Cl.: A01C 7/08, A01B 49/06

(54) **Improved agricultural machine for the distribution of products**
Verbesserte landwirtschaftliche Maschine zur Verteilung von Produkten
Machine agricole améliorée pour la distribution de produits

(30) Priority: 10.08.2006 IT VI20060258
(43) Date of publication of application: 13.02.2008
(73) Proprietor: Torrico S.r.l., 36053 Gambellara (Vincenza) (IT)
(72) Inventor: Pegoraro, Luciano, 36040, Sarego (Vicenza) (IT)
(74) Representative: Iannone, Carlo Luigi

(56) References cited:
- EP-A- 0 506 210
- WO-A-2005/065440
- GB-A- 2 302 075
- GB-A- 2 307 680

## Description

The present invention generally refers to an improved agricultural machine for the distribution of products in the soil.

More in particular, the invention regards an agricultural machine adapted to sow and/or fertilise the soil, which can possibly be coupled with pliable soil working machines, specifically of folding or reclosing type, such as harrows, tooth cultivators, disc cultivators, rollers etc.

Specifically, sowing machines are traditionally coupled to harrows, i.e. agricultural machines, operated by a tractor, capable of crumbling the soil at not-overly excessive depths, also by means of teeth-rotating or knife-rotating tools, connected to rear rollers or pack, cage, or spiral rollers and/or rollers with spikes for the control of the working depth.

Such structure, in fact, achieves an optimal working of the soil and the best conditions for a simultaneaous or subsequent sowing operation.

The sowing machinery of known type, on the other hand, usually comprises a hopper containing the seeds and/or fertilising products, normally positioned on the back of the tractor, near the sowing members (lister discs), and in several cases complete with hydraulic screw loader, and one or more central volumetric meters, which normally interact with an air jet dispenser (operated by a turbine and possible equipped with selector for common seeds and fine seeds), for the transportation of the seed and the division and conveying of the seeds to the lister discs; the sowing machine also comprises one or more sowing bars, equipped with seed-harrow beams.

In order to limit the machine size, in particular on the back of the tractor (where there are both the sowing members and the preparation devices of the soil to be sowed) and to overcome the mechanical imbalances of the entire structure, further alternative embodiment solutions have also been proposed, such as positioning the containment hopper of the product (granular or powder) to be distributed in the soil in front of the tractor, together with the mechanical operation wheel of the meter.

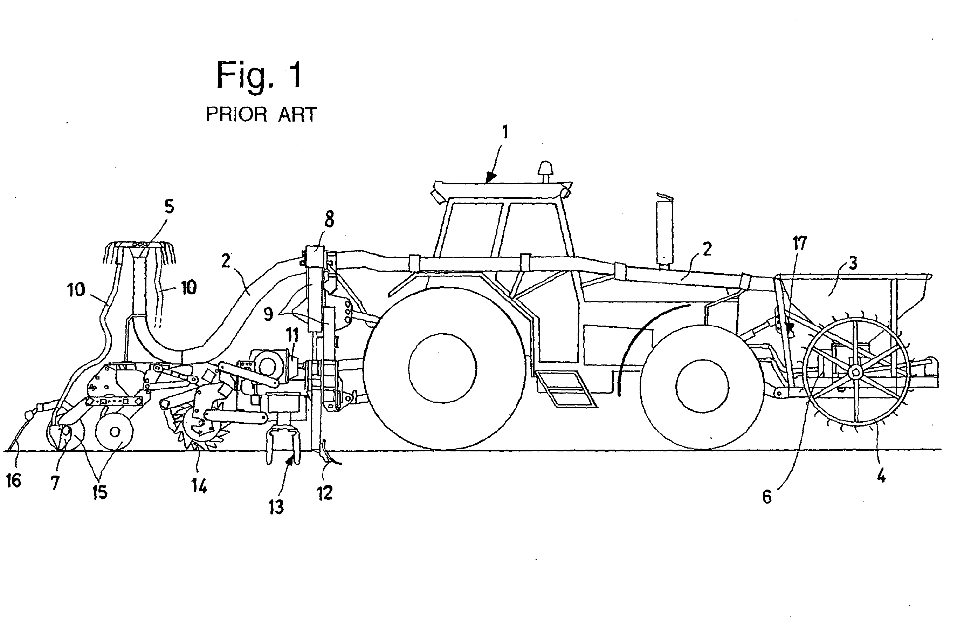

Such solution, illustrated in detail in the attached figure 1, nevertheless compels the use of tubing for sending the product to the seed distributor members, as well as appropriate transmission systems of the product of mechanical, hydraulic or electric type, such as suckers, turbines, blowers and/or fans, which are usually installed near the front hopper.

Moreover, delays are verified in the distribution of the product flow in the soil at the start of the tractor 1, since the product, before arriving in the soil, must run through the entire tubing 2, which connects the front hopper 3, connected to the mechanical operation wheel 4 of the meter, to the distributor head 5, installed in the rear of the tractor 1; similarly, when the tractor 1 is stopped, the entire product quantity (seed or fertiliser) present inside the tubing 2 is completely unloaded in a single point of the soil, with the inevitable losses resulting from such situation.

The abovementioned phenomenon is known with the name of "failed plantation" and is due to the fact that the meter 6 of the product is mechanically connected to the hopper 3 and is far from the sowing members 7.

Such drawback is overcome by making agricultural machines in which the hopper for containing the product to be distributed is always installed on the front of the tractor, while the distributor, separated from the hopper, is installed behind the tractor, at the end of the connection tubing and near the sowing members. In such a manner, an optimal division is also obtained of the machine weight, even if the quantity of product to be distributed in the soil is limited to the capacity of the front hopper.

In order to increase the distribution capacity of seeds and/or fertilisers, so to carry out a complete working of the soil with a single product load, it has also been thought to place a hopper in a position behind the tractor, beyond the front hopper, in order to maintain an acceptable autonomy of sowing and/or distribution in the soil of material in general. A conveying system of this type is known for example from GB-A-2307680.

Nevertheless, the described solution always foresees the use of a tubing for the transmission of the seed and/or fertilisers, as well as the insertion of appropriate transmission systems of the product to be distributed in the soil, such as fans, turbines and/or suckers, with complex apparatuses operated by appropriate hydraulic and/or mechanical motors, which require electric power drawing points in front of the tractor.

All of this involves further production and management costs, as well as energy consumption, which would be desirable to reduce.

Object of the present invention is therefore that of overcoming the abovementioned drawbacks, and in particular that of making an improved farming machine for the distribution of product which permits easily carrying out, and in reduced times with respect to the traditional machines, a suitable working of the soil, complete with sowing and/or distribution of granular or powder products on the soil, at the same time ensuring limited size and reduced costs with respect to the traditional machinery, and a distribution autonomy of the acceptable product, executable work being equal.

Another object of the present invention is that of making improved agricultural machine for the distribution of products which permits adequately controlling the flow of product to be distributed in the soil.

Another object of the present invention is that of making an improved agricultural machine for the distribution of products which can be adapted to all typologies of pliable machines and folding tools for the preparation of the soil, whether they are equipped or not with power takeoff.

Another object of the present invention is that of making an improved agricultural machine for the distribution of products, which has an extremely stable and compact structure and high safety, and is also simple and economical to make, executable work being equal, with respect to the traditional machines.

Further object of the invention is that of making an improved agricultural machine for the distribution of products which permits obtaining an improved management in the use of the employed energy and consequent lower management costs with respect to the traditional structural solutions.

These and other aims according to the present invention will be achieved by making an improved agricultural machine for the distribution of products, according to the attached claim 1; other technical characteristics of detail are described in the subsequent claims.

In an advantageous manner, the meter device is attached to a secondary hopper containing the product to be distributed in the soil, positioned as close as possible to the sowing members in order to avoid the "failed plantation" phenomenon, while the primary hopper, placed in front of the tractor, is connected by means of a lateral tubing to an intermediate hopper, installed on the upper part of the secondary hopper, adapted to control the granular or powder product flow entering in the secondary hopper.

The described structure moreover permits operating the suction turbine of the product from the primary hopper to the loading of the intermediate hopper, and for the time period strictly necessary for this operation, thus improving, with respect to the known machines, the management of the employed energy and therefore obtaining a considerable energy and related cost savings.

Moreover, particular filters are used so to carry out the suction of the free air from every kind of impurity. Finally, the further use is foreseen of specific tubing provided with appropriate valves (so-called "tram lines") for the recovery of the seed which is not to be distributed on those trajectories of the soil plot employed for the subsequent passage of means adapted for the fertilising and dispersion treatments of the fungicides, in order to instantly and newly insert the product in the secondary hopper, whether it is granular or powder (such as seeds and/or fertilisers).

Further characteristics and advantages of an improved agricultural machine for the distribution of products, according to the present invention, will be more evident from the following description related to an exemplifying and preferred but not limiting embodiment, and referred to the enclosed schematic drawings, where:
- Figure 1 is a side schematic view of an agricultural machine for the distribution of products connected to a tractor and, in particular, of a sowing machine, complete with rotating harrow for the preparation of the soil for the sowing, achieved according to the prior art;
- Figure 2 is a side schematic view of an improved machine for working the soil and connected to a tractor, and in particular of a sowing machine complete with rotating harrow for the preparation of the soil for the sowing, achieved according to the present invention;
- Figure 3 is an enlarged schematic view of the rear part of the improved agricultural machine of figure 2, according to the present invention, where the suction, metering and sowing circuits are visible in detail.

It should first of all be understood that even if the following description is referred to the use of a sower combined with a particular typology of rotating harrow, the invention is extendible without any significant variation of the inventive concept, to any typology of machine or agricultural tool, which can possibly be coupled to reclosable machines and other types such as harrows, tooth cultivators, disc cultivators, rollers etc. with reclosable tools and other types, adapted for the preparation and/or working of the soil.

Moreover, the machine in its entirety can also be intended as a single machine for the distribution of a granular product (seed) and/or powder (fertiliser), i.e. for the sowing and/or fertilising, leaving out of consideration the coupling with a machine which can be used, specifically, for working the soil.

With particular reference to figure 1, which shows a particular embodiment of sowing machine according to the prior art, a hopper 3 is identified, as already mentioned above, for the containment of the seeds, placed in front of the tractor 1, by means of a support structure 17, and mechanically connected to a meter device 6, which is driven by means of the wheel 4.

The hopper 3 is connected, by means of the tubing 2, to the distributor head 5, from which the flexible tubes 10 depart which reach the sowing members 7, associated with the listers 15 and followed by the seed-harrow beam 16.

Due to the use of a blower or a centrifugal fan, positioned near the hopper 3 and not directly visible in figure 1, the seeds to be distributed in the soil are sent, by means of the tubing 2, to the distribution head 5 and from here to the sowing members 7.

The agricultural machine is also coupled to a rotating harrow, installed in back of the tractor 1, and by means of the power takeoff 11, operates soil preparator tools 12, 13, 14 which permit refining the soil clods, in order to cause a crushing and partially finishing action of the surface soil.

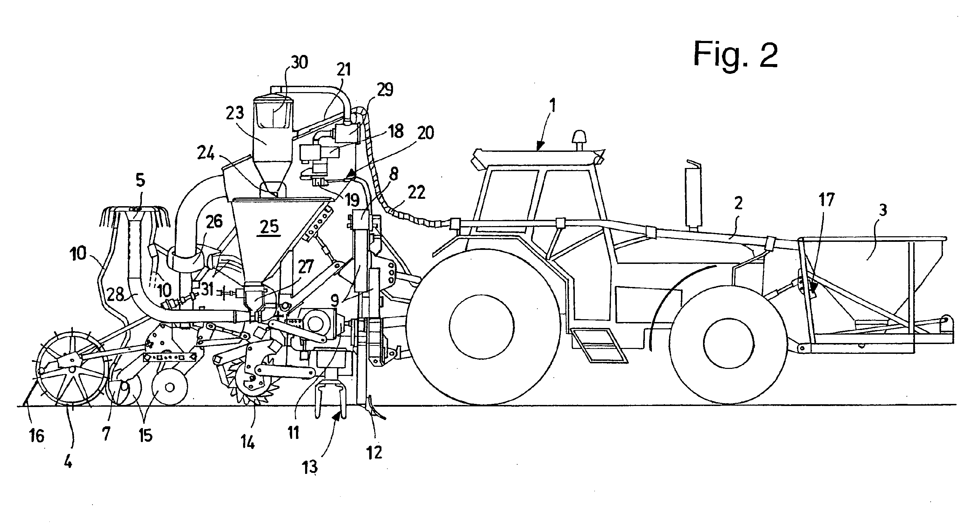

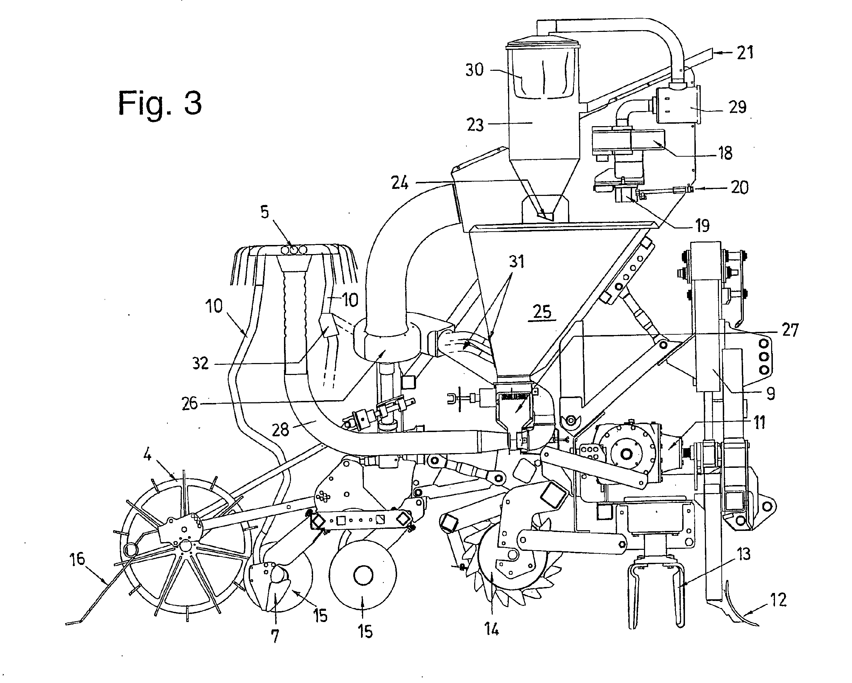

For the course of the treatment, one should examine that in the figures 2 and 3, which show an exemplifying and preferred but not limiting embodiment of an improved agricultural machine for the working of the soil according to the present invention, the same reference numbers are used as in figure 1 to indicate the devices having the same functions as those present in the traditional sowing machine illustrated in figure 1.

Therefore, with particular reference to such figures 2 and 3, the agricultural machine according to the invention foresees the use of one or more hoppers 3, which act as primary tank for the containment of seeds and/or fertilisers, and generally granular or powder products to be distributed in the soil; the hoppers 3 which can also be composed of containers or simple, flexible large seed bags, are installed in front of or on the side of the tractor 1, by means of the support structure 17, while the soil working and preparation machine, which in the illustrated embodiment is constituted of a rotating harrow, is installed in back of the tractor 1 so to obtain an adequate balance of the weights.

Moreover, the product contained in the hopper 3 is sucked, by means of the centrifugal sucker 18, which is in turn controlled by the hydraulic motor 19 by means of the hydraulic power supply 20 of the tractor 1, towards the suction pipe 21 by means of the tubing 2, which departs from inside the hopper 3 and runs along the length of the tractor 1 until it is connected with the tubular junction element 22 connected with the suction pipe 21.

In turn, the suction pipe 21 is connected with an intermediate hopper 23, having substantially lower capacity with respect to that of the primary hopper 3 and shaped as an overturned frustoconical section, which terminates with a door 24, whose opening occurs with the lack of reduced pressure in the intermediate hopper 23 due to the shutting off of the sucker 18 or due to the deflection of the suction current, by the signal produced by a level sensor in the hopper 23 itself, in order to control the moving product flow.

The door 24 communicates with a further secondary hopper 25, which acts as tank and/or storage chamber to ensure the continuity of feed to the meter 27, even during the suction step, during which the intermediate hopper 23, during filling, is closed due to the reduced suction pressure.

The loading of granular (seed) or powder (fertiliser) product to be distributed in the soil arrives in the secondary hopper 25 due to gravity.

Moreover, below the secondary hopper 25, a product meter 27 is placed, mechanically operated by the wheel 4 or by a generic speed control device (such as, for example, a land radar associated with an electric motor), which regulates the metering of seeds and/or fertilisers to be sent, by means of the tubing 28 and by means of the delivery action of a centrifugal fan 26, to the distributor head 5, and from here by means of the flexible tubes 10 to the distribution members 7.

The position of the metering, distribution and sowing system (installed behind the tractor 1, separated from the primary hopper 3 containing the product and placed as close as possible to the sowing members 7) is optimised in order to equally divide the structure weight and in order to avoid imbalances and delays in the flow of product to be distributed in the soil at the start of the tractor 1 or with the variation of the advancing speed or stopping of the same tractor 1.

Moreover, with respect to the traditional solutions, a further intermediate hopper 23 is employed, equipped with door 24, adapted to momentarily hold the product sucked in a load cycle, according to pre-established parameters; in particular, when a product level (drawn from the containment hopper 3) is reached in the intermediate hopper 23 which has been predetermined by a level sensor, an electric valve controls the shutting off of the suction 18 or the deflection of the suction air flow and consequent absence of reduced pressure in the intermediate hopper 23, causing the opening of the door 24 by gravity, causing the transfer of a predetermined quantity of product in the secondary hopper 25 and from here to the meter 27.

Hence, with the transfer of the product in the secondary hopper 25, the door 24 is freely opened, and once the transfer is completed, the aforesaid door 24 is closed due to the action of a counterweight; moreover, a sensor connected thereto sends a reactivation signal of the suction to a new product quantity from the hopper 3 to the intermediate hopper 23.

Such functioning modality involves the operation of the suction turbine 18 only for the period strictly necessary for loading the product in the intermediate hopper 23 and with evident consequent savings in terms of consumed energy and related costs.

The delivery fan 26, on the other hand, functions so to ensure the sending of the load from the secondary hopper 25 to the distribution head 5, and moreover foresees the use of two operation typologies, adapted for the suction and delivery of the product to be distributed in the soil towards the distributor members 7, i.e. two different energy sources, which can be mechanical, hydraulic or electric, even diversely combined, situated behind the tractor 1 and independent from each other in order to optimise the energy management to the traditional solutions.

The invention further foresees the use of automatic cleaning filters of the air, in order to achieve, by means of the centrifugal sucker or vacuum pump 18, the suction of the air in an environment protected from impurities; particularly used is a first filter 29, connected on one side to the sucker 18 and on the other side to an intermediate hopper 23, adapted for the recovery of the fine powders, and a main self-cleaning filter 30, arranged at the upper entrance of the intermediate hopper 23, which holds the largest impurity particles.

Finally, the further use is foreseen of specific tubing 31 (so-called "tram lines") provided with appropriate valves 32, for the recovery of the seed to be non-distributed on those trajectories of the soil plot employed for the subsequent passage of means adapted for fertiliser and fungicide treatments, in order to instantly and newly insert the product in the secondary hopper 25, whether it is granular or powder (such as seeds and/or fertilisers).

As described above, therefore, during the working of the soil, the primary hopper 3, due to the product optimisation with the presence of the intermediate hopper 23 connected to the second hopper 25, is capable of maintaining excellent product autonomy (seeds and/or fertilisers) and, at the same time, permits limiting the overall size of the machine.

It is confirmed, finally, that the hoppers 3, 23 and 25 can also be used as container, not just for seeds for also for any other granular or powder product, such as for example fertilisers etc., maintaining the same characteristics of reliability and efficiency indicated above and moreover, between the aforesaid hoppers 3, 23, 25, the hopper 3 can have flexible container structure and/or simply sack structure containing the seed.

From the above description, the characteristics of the improved agricultural machine for the working of the soil, object of the present invention, are clear as are its advantages.

Finally, it is clear that numerous variants can be made to the improved agricultural machine in question, as it is clear that, in the practical actuation of the invention, the materials, shapes and sizes of the illustrated details can be of any type according to needs, and the same can be substituted with other technically equivalent elements.

## Claims

1. Agricultural machine for the distribution of products, of the type comprising a first hopper (3) or tank containing granular and/or powder products to be distributed in the soil, connected, by means of at least one tubing (2) inside of which the products to be distributed in the soil move, to distribution means (5 , 7, 10) of the products in the soil, wherein said tubing (2) is connected to at least one suction pipe (21) of the products to be distributed in the soil, which leads inside at least one intermediate second hopper (23), in turn communicating by means of automatically operable opening and closing means (24) with at least a third hopper (25) connected with at least one meter device (27), from which said products to be distributed in the soil are conducted to said Agricultural distribution means (5, 7, 10) **characterised in that** said opening and closing means (24) of said intermediate hopper (23) include at least one door, automatically operated in opening and closing, as a function of the quantity of the product drawn from said first hopper (3) and present inside said intermediate hopper (23).

2. Agricultural machine as in claim 1, **characterised in that** said granular and/or powder products to be distributed in the soil include seeds and/or fertilisers. Agricultural

3. Agricultural machine as in claim 1, **characterised in that** the products contained inside said first hopper (3) are sucked inside said tubing (2) and inside said pipe (21) by means of suction means (18).

4. Agricultural machine as in claim 1, **characterised in that** said meter device (27) regulates the metering of the products, which arrive in the third hopper (25) by means of said intermediate hopper (23), and from here are sent to said distribution means (5, 7, 10) by means of fan means (26).

5. Agricultural machine as in claim 1, **characterised in that** said meter device (27) is positioned near said distributor means (5, 7, 10).

6. Agricultural machine as in claim 3, **characterised in that** said intermediate hopper (23) foresees the use of filtering means (29) for the automatic cleaning of the air. Agricultural

7. Agricultural machine as in claim 6, **characterised in that** at least one filtering means (29), adapted for the recovery of the fine powders, is connected to said intermediate hopper (23) and to said suction means (18).

8. Agricultural machine as in claim 7, **characterised in that** said at least one second filtering means (30), placed at the inlet of said intermediate hopper (23), is adapted to hold the largest impurity particles

9. Agricultural machine as in claim 1, **characterised in that** said distributor means (5, 7, 10) are connected to said intermediate hopper (23) by means of recovery tubing (31) which can be used for directly reinserting the product to be distributed in the soil inside said intermediate hopper (23), by means of recovery valves (32).

## Patentansprüche

1. Landwirtschaftliche Maschine zur Verteilung von Produkten der Art umfassend einen ersten Behälter (3) oder Tank, enthaltend granulare und/oder pulverförmige Produkte, die in dem Boden zu verteilen sind, verbunden mittels zumindest einer Leitung (2), innerhalb derer sich die in dem Boden zu verteilenden Produkte bewegen, mit Verteilmitteln (5, 7, 10) der Produkte in dem Boden, wobei die Leitung (2) verbunden ist mit zumindest einem Saugrohr (21) der in dem Boden zu verteilenden Produkte, das in zumindest einen intermediären zweiten Behälter (23) führt, wiederum kommunizierend mittels automatisch betätigbarer Öffnungs- und Schließmittel (24) mit zumindest einem dritten Behälter (25), verbunden mit zumindest einer Zumessvorrichtung (27), von wo die in dem Boden zu verteilenden Produkte zu den Verteilmitteln (5, 7, 10) geleitet werden, **dadurch gekennzeichnet, dass** die Öffnungs- und Schließmittel (24) des intermediären Behälters (23) zumindest eine Tür umfassen, automatisch betätigt beim Öffnen und Schließen als Funktion der Menge des Produkts, die aus dem ersten Behälter (3) geholt wird und in dem intermediären Behälter (23) vorhanden ist.

2. Landwirtschaftliche Maschine gemäß Anspruch 1, **dadurch gekennzeichnet, dass** die granularen und/oder pulverförmigen Produkte, die in dem Boden zu verteilen sind, Saatgut und/oder Dünger umfassen.

3. Landwirtschaftliche Maschine gemäß Anspruch 1, **dadurch gekennzeichnet, dass** die Produkte, die in dem ersten Behälter (3) enthalten sind, in die Leitung (2) und in das Rohr (21) mittels Saugmitteln (18) gezogen werden.

4. Landwirtschaftliche Maschine gemäß Anspruch 1, **dadurch gekennzeichnet, dass** die Zumessvorrichtung (27) das Zumessen der Produkte reguliert, die in den dritten Behälter (25) gelangen mittels des intermediären Behälters (23), und von hier zu den Verteilmitteln (5, 7, 10) geschickt werden mittels Gebläsemitteln (26).

5. Landwirtschaftliche Maschine gemäß Anspruch 1, **dadurch gekennzeichnet, dass** die Zumessvorrichtung (27) nahe den Verteilmitteln (5, 7, 10) positioniert ist.

6. Landwirtschaftliche Maschine gemäß Anspruch 3, **dadurch gekennzeichnet, dass** der intermediäre Behälter (23) Filtermittel (29) zum automatischen Reinigen der Luft umfasst.

7. Landwirtschaftliche Maschine gemäß Anspruch 6, **dadurch gekennzeichnet, dass** zumindest ein Filtermittel (29), das angepasst ist zum Einholen feinen Pulvers, verbunden ist mit dem intermediären Behälter (23) und mit den Saugmitteln (18).

8. Landwirtschaftliche Maschine gemäß Anspruch 7, **dadurch gekennzeichnet, dass** zumindest ein zweites Filtermittel (30), platziert an dem Einlass des intermediären Behälters (23), angepasst ist, um die größten Fremdpartikel einzubehalten.

9. Landwirtschaftliche Maschine gemäß Anspruch 1, **dadurch gekennzeichnet, dass** die Verteilmittel (5, 7, 10) verbunden sind mit dem intermediären Behälter (23) mittels Einholleitung (31), verwendbar zum direkten Wiedereinbringen des in dem Boden zu verteilenden Produkts in den intermediären Behälter (23) mittels Einholventilen (32).

## Revendications

1. Machine d'agriculture pour la distribution de produits, du type comprenant une première trémie (3) ou cuve contenant des produits en granulés et/ou en poudre destinés à être distribués dans le sol, raccordée, au moyen d'au moins une tubulure (2) à l'intérieur de laquelle se déplacent les produits à distribuer dans le sol, à des moyens de distribution (5, 7, 10) des produits dans le sol, ladite tubulure (2) étant raccordée à au moins un tuyau d'aspiration (21) des produits à distribuer dans le sol, qui mène à l'intérieur d'au moins une deuxième trémie intermédiaire (23), communiquant quant à elle, par l'intermédiaire de moyens d'ouverture et de fermeture (24) actionnables automatiquement, avec au moins une troisième trémie (25) raccordée à au moins un dispositif de dosage (27), depuis lequel lesdits produits à distribuer dans le sol sont conduits jusqu'auxdits moyens de distribution (5, 7, 10), **caractérisée en ce que** lesdits moyens d'ouverture et de fermeture (24) de ladite trémie intermédiaire (23) comprennent au moins une porte, actionnable automatiquement en ouverture et en fermeture, en fonction de la quantité de produit tirée de ladite première trémie (3) et présente à l'intérieur de ladite trémie intermédiaire (23).

2. Machine d'agriculture selon la revendication 1, **caractérisée en ce que** lesdits produits en granulés et/ou en poudre à distribuer dans le sol comprennent des graines et/ou des engrais.

3. Machine d'agriculture selon la revendication 1, **caractérisée en ce que** les produits contenus à l'intérieur de ladite première trémie (3) sont aspirés à l'intérieur de ladite tubulure (2) et à l'intérieur dudit tuyau (21) par l'intermédiaire de moyens d'aspiration (18).

4. Machine d'agriculture selon la revendication 1, **caractérisée en ce que** ledit dispositif de dosage (27) régule le dosage des produits qui arrivent dans la troisième trémie (25) via ladite trémie intermédiaire (23), et qui, de là, sont envoyés auxdits moyens de distribution (5, 7, 10) par l'intermédiaire de moyens formant ventilateur (26).

5. Machine d'agriculture selon la revendication 1, **caractérisée en ce que** ledit dispositif de dosage (27) est positionné à proximité desdits moyens de distribution (5, 7, 10).

6. Machine d'agriculture selon la revendication 3, **caractérisée en ce que** ladite trémie intermédiaire (23) comprend des moyens de filtrage (29) pour le nettoyage automatique de l'air.

7. Machine d'agriculture selon la revendication 6, **caractérisée en ce qu'**au moins un moyen de filtrage (29), adapté pour la récupération de poudres fines, est raccordé à ladite trémie intermédiaire (23) et auxdits moyens d'aspiration (18).

8. Machine d'agriculture selon la revendication 7, **caractérisée en ce** ledit au moins un deuxième moyen de filtrage (30), placé à l'entrée de ladite trémie intermédiaire (23), est adapté pour retenir les plus grosses particules d'impureté.

9. Machine d'agriculture selon la revendication 1, **caractérisée en ce que** lesdits moyens de distribution (5, 7, 10) sont raccordés à ladite trémie intermédiaire (23) au moyen d'une tubulure de récupération (31) qui peut être utilisée pour réinsérer directement le produit à distribuer dans le sol à l'intérieur de ladite trémie intermédiaire (23), au moyen de valves de récupération (32).
